# EUROPEAN PATENT APPLICATION

(11) **EP 2 998 270 A1**
(43) Date of publication of application: **23.03.2016**
(21) Application number: 14797161.8
(22) Date of filing: 15.05.2014
(51) Int. Cl.: C01B 7/07, B01D 53/02, B01J 20/02, B01J 20/08

(54) **METHOD FOR PURIFYING HYDROGEN CHLORIDE**

(30) Priority: 15.05.2013 JP 2013103270
(71) Applicant: Asahi Glass Company, Limited, Tokyo 100-8405 (JP)
(72) Inventor: NAGANUMA, Tsutomu, Tokyo 100-8405 (JP); NAKABAYASHI, Hiroyuki, Tokyo 100-8405 (JP); MIYATAKE, Satoru, Tokyo 100-8405 (JP); NAKADA, Kiyoshi, Tokyo 100-8405 (JP); NAKAGAWA, Yoshihiro, Tokyo 100-8405 (JP)
(74) Representative: Müller-Boré & Partner Patentanwälte PartG mbB
(86) International application number: PCT/JP2014/062985
(87) International publication number: WO 2014/185499

(57) **Abstract**

To provide a method for purifying hydrogen chloride, which is capable of removing, with high efficiency, fluorine compounds such as hydrogen fluoride from a crude reaction gas obtained by reacting hydrogen fluoride with chloroform and which is capable of sufficiently purifying hydrogen chloride, and a purified aqueous hydrochloric acid solution.

A method for purifying hydrogen chloride comprising a condensation step of condensing, by a condenser 12, R-22 gas in a crude reaction gas A obtained by reacting hydrogen fluoride with chloroform, to obtain a condensate B containing R-22, and a crude hydrogen chloride gas C containing hydrogen chloride gas, a gas-liquid separation step of conducting gas-liquid separation of the condensate B and the crude hydrogen chloride gas C, a defluorination step of adsorbing and removing, by an adsorbent, fluorine compounds in the crude hydrogen chloride gas C in a defluorination column18, to purify hydrogen chloride gas D, and an absorption step of absorbing hydrogen chloride in the hydrogen chloride gas D into absorption water E in an absorption column 22; and a method for producing a purified aqueous hydrochloric acid solution from the obtained hydrogen chloride.

## Description

### TECHNICAL FIELD

The present invention relates to a method for purifying hydrogen chloride formed as a by-product at the time of producing chlorodifluoromethane.

### BACKGROUND ART

Hydrogen chloride and an aqueous hydrochloric acid solution are used in a wide range of applications for e.g. production of various chemicals, production of vinyl chloride, ethylene chloride, etc., acid pickling of iron and steel, etc. Hydrogen chloride is usually produced by reacting hydrogen and chlorine formed during brine electrolysis, but, in recent years, such a proportion has been increasing that hydrogen chloride formed as a by-product at the time of producing Freon such as chlorodifluoromethane (hereinafter referred to as "R-22"), is utilized by purifying it.

In the case of utilizing hydrogen chloride formed as a by-product at the time of producing Freon such as R-22, it is necessary to sufficiently remove fluorine compounds. For example, in production of vinyl chloride or ethylene chloride, the catalyst is likely to be poisoned by fluorine compounds, and therefore, it is required to reduce fluorine compounds to such an extent that the fluorine ion concentration in hydrogen chloride to be used, would be at most a few mass ppm. It is particularly important to effectively and economically remove hydrogen fluoride which is highly water-soluble like hydrogen chloride. Further, also in the case of an aqueous hydrochloric acid solution, the content of fluorine and its compounds is regulated by e.g. Drinking Water Quality Standards, and the requirement for the amount of fluorine compounds which may be contained, has become severer.

The following (i), (ii) or (iii) is known as a method for purifying hydrogen chloride gas, or hydrogen chloride gas formed, as a by-product, at the time of producing R-22, and further obtaining an aqueous hydrochloric acid solution.
(i) A purification method for adsorbing and separating organic compounds in hydrogen chloride gas by activated carbon (Non-patent Document 1).
(ii) As an example of purifying hydrogen chloride gas formed as a by-product in production of R-22, conducted in the past by the present inventors, a purification method comprising a step of adsorbing and removing fluorine compounds contained in a crude reaction gas containing by-product hydrogen chloride gas recovered from a reactor for producing R-22, by allowing the crude reaction gas to pass through a granular activated carbon-packed tube in a state heated to about 100°C, a sulfuric acid treatment step of cooling the hydrogen chloride gas obtained in the adsorbing and removing step and supplying it to a sulfuric acid scrubber, to remove hydrogen fluoride, etc. as a hydrofluoric acid sulfuric acid mixture, and an absorption step of letting the by-product hydrogen chloride gas contained in the reaction gas after the sulfuric acid treatment step, be absorbed in water to obtain an aqueous hydrochloric acid solution.
(iii) A method for purifying hydrogen chloride gas containing fluorine compounds, discharged as a by-product in a production step for R-22, which comprises an absorption step of letting the hydrogen chloride gas be absorbed in water or in an aqueous hydrochloric acid solution, an aeration step of allowing air and/or an inert gas to pass through the aqueous hydrochloric acid solution obtained in the absorption step, to remove a hardly-soluble volatile component, and after the aeration step, an aqueous hydrochloric acid solution-purification step of letting fluorine compounds in the aqueous hydrochloric acid solution be adsorbed and removed by an adsorbent such as silica gel, etc. (Patent Document 1).

On the other hand, a method of treating a hydrogen chloride gas containing hydrogen fluoride with activated alumina having boron oxide supported thereon, to remove the hydrogen fluoride, is also known (Patent Document 2).

### PRIOR ART DOCUMENTS

### PATENT DOCUMENTS

Patent Document 1: Japanese Patent No. 4,758,722
Patent Document 2: JP-A-50-131891

### NON-PATENT DOCUMENT

Non-patent Document 1: SEISAN KENKYU (Production Study), Vol. 16, No. 3, p.75-79 (manuscript received on January 7, 1964)

### DISCLOSURE OF INVENTION

### TECHNICAL PROBLEMS

However, in the above method (i), although a case for removing chlorine compounds is disclosed, there is no disclosure of a case for removing fluorine compounds, and in the above method (ii), the removal of fluorine compounds is inadequate, and the amount of fluorine compounds contained in the obtainable hydrochloric acid is substantial.

Further, in the above method (iii), the efficiency in removal of hydrogen fluoride in the aqueous hydrochloric acid solution-purification step is not sufficient.

Further, the method to remove hydrogen fluoride by using activated alumina having boron oxide supported thereon, as disclosed in Patent Document 2, is economically disadvantageous, since it is required to frequently change the activated alumina, and the efficiency in removal of fluorine compounds is insufficient in order to purify hydrogen chloride from a crude reaction gas obtained in production of R-22.

It is an object of the present invention to provide a method for purifying hydrogen chloride formed as a by-product at the time of producing R-22, which is capable of removing fluorine compounds such as hydrogen fluoride with high efficiency and which is capable of sufficiently purifying the hydrogen chloride, and further a method for obtaining a purified aqueous hydrochloric acid solution.

### SOLUTION TO PROBLEMS

In order to solve the above problems, the present invention has adopted the following constructions.
[1] A method for purifying hydrogen chloride from a crude reaction gas containing R-22 gas and hydrogen chloride gas, obtained by reacting hydrogen fluoride with chloroform, which comprises
   a condensation step of condensing R-22 gas in the crude reaction gas to obtain a condensate containing R-22, and a crude hydrogen chloride gas containing hydrogen chloride gas;
   a gas-liquid separation step of subjecting the condensate and the crude hydrogen chloride gas to gas-liquid separation;
   a defluorination step of contacting the separated crude hydrogen chloride gas with an adsorbent for adsorbing fluorine compounds, to adsorb and remove fluorine compounds in the crude hydrogen chloride gas thereby to purify hydrogen chloride gas; and
   an absorption step of letting hydrogen chloride in the hydrogen chloride gas be absorbed in water or in an aqueous hydrochloric acid solution.
[2] The method for purifying hydrogen chloride according to the above [1], wherein in the gas-liquid separation step, the condensate is heated.
[3] The method for purifying hydrogen chloride according to the above [1] or [2], wherein the above adsorbent is at least one member selected from the group consisting of activated alumina, aluminum hydroxide, aluminum chloride, silane and chlorosilane.
[4] The method for purifying hydrogen chloride according to any one of the above [1] to [3], wherein in the defluorination step, the temperature of the adsorbent is from 100 to 120°C.
[5] The method for purifying hydrogen chloride according to any one of the above [1] to [4], wherein in the defluorination step, the pressure under which the separated crude hydrogen chloride gas is contacted with the adsorbent for adsorbing fluorine compounds, is from 0.65 to 0.8 MPaG.
[6] The method for purifying hydrogen chloride according to any one of the above [1] to [5], wherein in the defluorination step, the superficial velocity at which the separated crude hydrogen chloride gas is contacted with the adsorbent for adsorbing fluorine compounds, is from 0.05 to 0.50 m/sec.
[7] The method for purifying hydrogen chloride according to any one of the above [1] to [6], wherein in the absorption step, the content of fluorine in the obtainable aqueous hydrochloric acid solution is at most 0.8 mg/L as calculated as hydrogen fluoride.
[8] The method for purifying hydrogen chloride according to any one of the above [1] to [7], wherein in the absorption step, the hydrogen chloride concentration in the obtainable aqueous hydrochloric acid solution is from 30 to 40 mass%.
[9] The method for purifying hydrogen chloride according to any one of the above [1] to [8], wherein the adsorbent is activated alumina which has been preliminarily contacted with purified hydrogen chloride gas.
[10] The method for purifying hydrogen chloride according to the above [9], wherein the temperature of the activated alumina at the time of being preliminarily contacted with purified hydrogen chloride gas, is at most 90°C.
[11] A method for producing an aqueous hydrochloric acid solution, which comprises conducting the method for purifying hydrogen chloride as defined in any one of the above [1] to [10].

### ADVANTAGEOUS EFFECTS OF INVENTION

According to the method for purifying hydrogen chloride of the present invention, it is possible to remove, with high efficiency, fluorine compounds such as hydrogen fluoride, etc. from a crude reaction gas containing hydrogen chloride, obtained in production of R-22, to sufficiently purify hydrogen chloride and further to obtain a purified aqueous hydrochloric acid solution.

### BRIEF DESCRIPTION OF DRAWINGS

Fig. 1 is a schematic view illustrating the respective steps in the method for purifying hydrogen chloride of the present invention.
Fig. 2 is a schematic view illustrating the respective steps in the purification method in Ex. 2.

### DESCRIPTION OF EMBODIMENTS

The method for purifying hydrogen chloride of the present invention is a method of purifying hydrogen chloride from a crude reaction gas (hereinafter referred to as "crude reaction gas A") containing R-22 gas and hydrogen chloride gas, obtained by reacting chloroform with hydrogen fluoride (HF), and further obtaining an aqueous hydrochloric acid solution.

In the crude reaction gas A, in addition to R-22 and by-product hydrogen chloride, unreacted hydrogen fluoride and chloroform, as well as by-products such as dichlorofluoromethane (hereinafter referred to as "R-21"), trifluoromethane (hereinafter referred to as "R-23"), carbonyl fluoride, etc., are contained.

The method for purifying hydrogen chloride of the present invention comprises the following condensation step, gas-liquid separation step, defluorination step and absorption step.

Condensation step: a step of condensing R-22 gas in the crude reaction gas A to obtain a condensate B containing R-22, and a crude hydrogen chloride gas C containing hydrogen chloride gas.

Gas-liquid separation step: a step of subjecting the condensate B and the crude hydrogen chloride gas C to gas-liquid separation.

Defluorination step: a step of contacting the separated crude hydrogen chloride gas C with an adsorbent for adsorbing fluorine compounds, to adsorb and remove fluorine compounds in the crude hydrogen chloride gas C thereby to obtain purified hydrogen chloride gas D.

Absorption step: a step of letting hydrogen chloride in the hydrogen chloride gas D be absorbed in water or in an aqueous hydrochloric acid solution.

### (Condensation step)

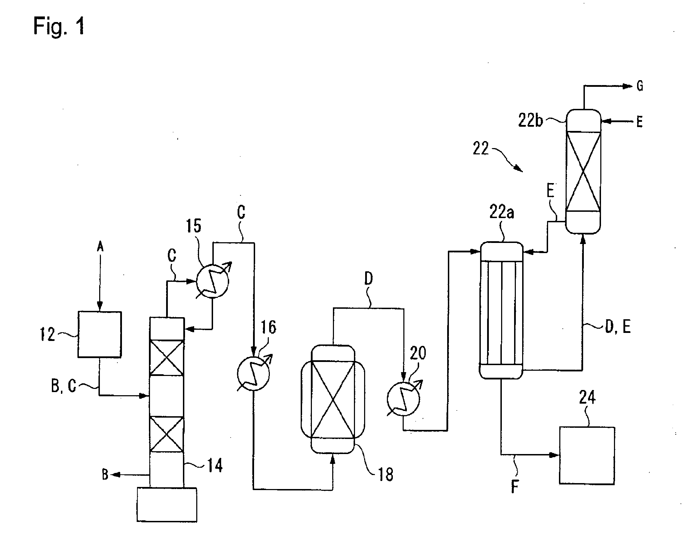

As shown in Fig. 1, a crude reaction gas A obtained in production of R-22 is supplied to a condenser 12, and in the condenser 12, the crude reaction gas A is cooled to condense R-22 gas in the crude reaction gas A, thereby to obtain a condensate B and a crude hydrogen chloride gas C.

High boiling substances such as R-22 (boiling point: -40.7°C), R-21 (boiling point: 8.92°C), chloroform (boiling point: 61.2°C) and hydrogen fluoride (boiling point: 19.54°C) will be condensed and mainly contained in the condensate B. Whereas, low boiling substances such as hydrogen chloride (boiling point: -85.0°C), R-23 (boiling point: -82.1°C) and carbonyl fluoride (boiling point: -84.57°C) will be mainly contained in the crude hydrogen chloride gas C.

The temperature in the condenser 12, i.e. the temperature of the crude reaction gas A in the condensation step, may be adjusted in consideration of the respective boiling points of the high boiling substances and the low boiling substances, so that the high boiling substances will be condensed, and the low boiling substances will be gaseous. The condensation step may be conducted under increased pressure. In a case where the condensation step is conducted under increased pressure, the above-mentioned temperature may be determined in consideration of the boiling points of the above high boiling substances and the above low boiling substances under the increased pressure condition.

The condenser 12 is not particularly limited, so long as it is one having a cooling function whereby the temperature of the crude reaction gas A can be lowered to a prescribed temperature.

### (Gas-liquid separation step)

From the condenser 12, the condensate B containing R-22, and the crude hydrogen chloride gas C containing hydrogen chloride gas, are sent to a distillation column 14, and in the distillation column 14, the condensate B is heated, so that the condensate B and the crude hydrogen chloride gas C are subjected to gas-liquid separation while conducting distillation operation. By carrying out gas-liquid separation while conducting distillation operation by heating the condensate B in the distillation column 14, hydrogen chloride in the condensate B can also be recovered, whereby the efficiency in recovery of hydrogen chloride increases. The boiling points of R-21, R-22, chloroform and hydrogen fluoride are substantially higher than the boiling point of hydrogen chloride, and thus, such high boiling substances and hydrogen chloride are not azeotropic. Therefore, the amount of transfer of such high boiling substances in the condensate B into the crude hydrogen chloride gas C by the heating is extremely small.

In the distillation column 14, the crude hydrogen chloride gas C containing hydrogen chloride, R-23 and carbonyl fluoride, is distilled from the column top, and the condensate B containing R-22, R-21, hydrogen fluoride and chloroform, is recovered from the column bottom.

In the distillation column 14, the column bottom temperature is controlled to be a temperature at a level where the distillation amount required for the production is obtainable under set system pressure and to prevent flooding caused by increasing the column bottom temperature more than necessary.

The distillation column 14 is not particularly limited, and a known distillation column may be employed.

In the distillation column 14, the majority of high boiling substances such as hydrogen fluoride, etc., will be separated from hydrogen chloride by distillation, as contained in the condensate B, but, a very small amount of high boiling substances will be contained also in the crude hydrogen chloride gas C. Therefore, in order to increase the hydrogen chloride purity in the distillate gas, it is preferred to provide a condenser 15 to the distillation column 14, to carry out a reflux operation by partial condensation.

The condensate B is recovered from the column bottom of the distillation column 14 and will be sent to a step to separate and purify R-21, R-22, etc., respectively.

### (Defluorination step)

The crude hydrogen chloride gas C recovered from the column top of the distillation column 14 is heated by a preheater 16 and sent to a defluorination column 18, and in the defluorination column 18, it is contacted, under high temperature and high pressure conditions, with an adsorbent for absorbing fluorine compounds, to adsorb and remove fluorine compounds in the crude hydrogen chloride gas C thereby to obtain a hydrogen chloride gas D. In the defluorination step, a very small amount of hydrogen fluoride remaining in the crude hydrogen chloride gas C and carbonyl fluoride as a low boiling substance, will be adsorbed and removed.

The temperature of the adsorbent in the defluorination step, i.e. the temperature in the defluorination column 18, is preferably from 100 to 120°C, more preferably from 100 to 110°C, in an increased pressure system. If the temperature departs from this range, the ability of the adsorbent to adsorb fluorine compounds tends to decrease.

In order to efficiently bring the temperature in the defluorination column 18 to be within the above preferred range, it is preferred to heat the crude hydrogen chloride gas C in the preheater 16 from 115 to 130°C, more preferably from 120 to 125°C. However, this temperature depends on the heat dissipation conditions of the line.

The pressure at the time of contacting the crude hydrogen chloride gas C with the adsorbent, i.e. the pressure in the defluorination column 18, is preferably from 0.65 to 0.8 MPaG, more preferably from 0.7 to 0.8 MPaG. The equilibrium adsorption quantity in gas phase adsorption depends on the pressure and usually reaches equilibrium at 1,000 kPa, but the upper limit of the pressure depends on the designed pressure of the defluorination column.

As a usual condition for use of activated alumina, the superficial velocity is said to be from 0.05 to 0.5 m/sec., and also in the case of adsorption of fluorine compounds, it is preferably used within such a range. The superficial velocity is more preferably from 0.10 to 0.30 m/sec. When the superficial velocity of the crude hydrogen chloride gas C is at most the upper limit value, contact time of the crude hydrogen chloride gas C with the adsorbent will be sufficiently obtained, and the efficiency in removal of fluorine compounds will be high.

The contact time of the crude hydrogen chloride gas C with the adsorbent may be suitably set in consideration of the efficiency in removal of fluorine compounds, the productivity, etc.

The adsorbent for adsorbing fluorine compounds, is preferably at least one member selected from the group consisting of activated alumina, aluminum hydroxide, aluminum chloride, silane and chlorosilane, more preferably activated alumina, from the viewpoint of high efficiency in removal of hydrogen fluoride and carbonyl fluoride.

As activated alumina, alumina gel made of alumina alone and alumina-silica gel having silica added to increase the specific surface area, are available. With a view to adsorbing fluorine compounds at a high efficiency, activated alumina made of alumina alone is more preferred. The degree of alumina alone in such activated alumina is preferably such that Al₂O₃ is at least 99.0 mass%, more preferably at least 99.7 mass%.

As activated alumina, granular activated alumina is particularly preferred.

The particle size of activated alumina is preferably at most 5 mm, more preferably from 2 to 4 mm. If the particle size of activated alumina exceeds the upper limit, the adsorption area decreases, although the pressure loss is reduced. If the particle size of activated alumina is less than the lower limit value, the pressure loss increases, although the adsorption area increases.

Here, the above particle size is a value defined by a particle size by means of sieves.

The specific surface area of activated alumina is preferably at least 100 m²/g, more preferably from 250 to 300 m²/g. When the specific surface area of activated alumina is at least the lower limit value, the efficiency in removal of fluorine compounds is high. If the specific surface area of activated alumina is less than the lower limit value, the amount of adsorption decreases.

Here, the above specific surface area is a value which is measured by a gas adsorption method.

Further, the activated alumina is preferably one which is preliminarily contacted with purified hydrogen chloride gas, from the viewpoint of high efficiency in removal of fluorine compounds. Specifically, it is preferred that activated alumina is packed in the defluorination column 18 and purified hydrogen chloride gas is preliminarily passed therethrough, whereupon purification of hydrogen chloride is carried out.

The reason as to why the efficiency in removal of fluorine compounds is increased by preliminarily contacting purified hydrogen chloride gas to activated alumina, is not necessarily clearly understood, but it is considered that the activated alumina surface is chlorinated, so that aluminum chloride having high affinity to fluorinated compounds is formed on the surface, whereby high adsorption efficiency is obtainable.

The purified hydrogen chloride gas to be preliminarily contacted to activated alumina, is preferably hydrogen chloride gas having a fluorine content of at most 2 mass ppm as calculated as HF, and hydrogen chloride gas having a fluorine content of at most 1 mass ppm is more preferred. So long as hydrogen chloride gas having a fluorine content is at most the above upper limit value, hydrogen chloride gas obtainable in the defluorination step in the method of the present invention may be used, or hydrogen chloride gas purified by a method other than the purification method of the present invention may be used.

In the case of preliminarily contacting purified hydrogen chloride gas to activated alumina, it is preferred that initially, a mixed gas of an inert gas (such as nitrogen gas) and hydrogen chloride gas, is contacted, and gradually, the proportion of hydrogen chloride gas is increased, so that finally, 100% hydrogen chloride gas is contacted. It is thereby possible to prevent an abrupt temperature increase by adsorption heat.

Further, in the case of preliminarily contacting hydrogen chloride gas to activated alumina, it is necessary to be careful about heat generation due to adsorption heat. If the temperature in the column rises beyond the designed temperature, deterioration by heat of a sealing material, etc. may possibly occur. From such a viewpoint, the temperature in the defluorination column during chlorination is preferably at most 90°C, more preferably at most 70°C.

The time for preliminarily contacting hydrogen chloride gas to activated alumina is roughly until the temperature in the defluorination column 18, i.e. the temperature of activated alumina, reaches equilibrium in such a state that 100% hydrogen chloride gas is contacted.

The configuration of the defluorination column 18 is not particularly limited, and it may be a fixed-bed of single tower type or continuous fixed-beds of plural towers type such as three towers type.

The fluorine concentration in the hydrogen chloride gas D obtainable in the defluorination step is preferably at most 10 mass ppm, more preferably at most 2 mass ppm, as calculated as HF.

### (Absorption step)

The hydrogen chloride gas D recovered from the defluorination column 18 is cooled by a cooler 20 and supplied to an absorption column 22, so that it is contacted with water or an aqueous hydrochloric acid solution (hereinafter generally referred to also as "absorbing water E"), and hydrogen chloride contained in the hydrogen chloride gas D is absorbed in absorbing water E, to obtain an aqueous hydrochloric acid solution F. R-23 being a low boiling substance contained in the hydrogen chloride gas D, is hardly soluble in water, and thus, it will remain in the gas phase and will thus be separated. Further, carbonyl fluoride contained in a very small amount in the hydrogen chloride gas D will be hydrolyzed to become hydrogen fluoride and carbon dioxide gas. The hydrogen fluoride will be absorbed in absorbing water E, and the carbon dioxide gas will be not more than the detection limit by gas chromatography in the gas phase.

Specifically, the absorption column 22 comprises a hydrogen chloride gas-absorption column 22a to which the hydrogen chloride gas D is supplied, and a packed tower-type recovery column 22b to which absorbing water E is supplied. The hydrogen chloride gas D is absorbed in absorbing water E in the hydrogen chloride gas-absorption column 22a, and a non-absorbed hydrogen chloride gas is absorbed in absorbing water E in the packed tower-type recovery column 22b. The aqueous hydrochloric acid solution F obtained by absorption in absorbing water E of hydrogen chloride in the hydrogen chloride gas D, is recovered in a recovery section 24 from the column bottom of the hydrogen chloride gas-absorption column 22a. The non-absorbed gas G containing R-23, not absorbed by absorbing water E, is sent from the column top of the packed tower-type recovery column 22b to a step of separating and purifying R-23.

Demineralized water is preferred as water to be used as absorbing water E.

In the case of using an aqueous hydrochloric acid solution as absorbing water E, the hydrogen chloride concentration in the aqueous hydrochloric acid solution is preferably at least an azeotropic concentration (ordinary pressure) i.e. at least 20 mass%, more preferably from 20 to 22 mass%. When the hydrogen chloride concentration in the aqueous hydrochloric acid solution to be supplied as absorbing water E is within the above range, it will be easy to recover an aqueous hydrochloric acid solution F having a hydrogen chloride concentration of from 30 to 40 mass% from the absorption column 22.

The temperature of absorbing water E in the absorption step is preferably at most the boiling point of the absorbing water E, more preferably from 20 to 50°C.

Usually, the higher the pressure, the higher the solubility of gas, and therefore, it is advantageous to operate the absorption column under high pressure, but the pressure in the absorption column is preferably determined in consideration of the temperature and pressure before and after the absorption column.

The contact time of the hydrogen chloride gas D with absorbing water E may be suitably set in consideration of the efficiency in absorption of hydrogen chloride, the productivity, etc.

The fluorine content in the aqueous hydrochloric acid solution F to be obtained in the absorption step is preferably at most 0.8 mg/L, more preferably at most 0.1 mg/L, as calculated as hydrogen fluoride, also from the environmental viewpoint.

According to the method for purifying hydrogen chloride of the present invention as described above, in the condensation step, the crude hydrogen chloride gas C containing hydrogen chloride, R-23 and carbonyl fluoride as low boiling substances, and the condensate B containing R-22, R-21, chloroform and hydrogen fluoride as high boiling substances, are separated. Therefore, at the time of the gas-liquid separation, the majority of high boiling substances such as hydrogen fluoride, etc. is separated from hydrogen chloride. Further, in the defluorination step and the absorption step, remaining hydrogen fluoride, and low boiling substances such as carbonyl fluoride, R-23, etc., are removed, whereby the amount of remaining fluorine compounds is further reduced. In such a manner, the purification method of the present invention is capable of removing fluorine compounds such as hydrogen fluoride, etc. with high efficiency from the crude reaction gas obtainable in the production of R-22 and capable of sufficiently purifying hydrogen chloride, as compared with conventional purification methods. Further, since the majority of hydrogen fluoride is removed in the condensation step and the gas-liquid separation step, the service life of the adsorbent used in the defluorination step is prolonged, such being advantageous also from an economical viewpoint.

Further, the method for purifying hydrogen chloride and further the method for purifying an aqueous hydrochloric acid solution, of the present invention, are not limited to the above-described methods.

For example, a dissipation step of passing an inert gas (such as nitrogen gas) or air through the aqueous hydrochloric acid solution F obtained in the absorption step to dissipate and further remove hardly soluble volatile components remaining in the aqueous hydrochloric acid solution, may further be provided. By carrying out the gas-liquid contact with the inert gas or air in such a dissipation step, hardly soluble volatile components (remaining R-22, R-23, chloroform) in the aqueous hydrochloric acid solution F will transfer to the gas phase and thus be further removed.

Further, in the method for purifying hydrogen chloride of the present invention, after the absorption step or the dissipation step, as the case requires, halogenated organic compounds other than fluorine-type, may further be removed by means of an adsorbent such as activated carbon or the like.

Further, in the gas-liquid separation step, it is preferred to distill the condensate from the viewpoint of the purity of hydrogen chloride and the high recovery rate, but a method of carrying out the gas-liquid separation without distilling the condensate, may be adopted.

### EXAMPLES

Now, the present invention will be described in detail with reference to Examples, but it should be understood that the present invention is by no means restricted by the following description. Ex. 1 is an Example of the present invention, and Ex. 2 and 3 are Comparative Examples.

### [Composition of crude reaction gas]

The concentration of fluorine compounds contained in a crude reaction gas used for purification, was obtained by letting the crude reaction gas be absorbed in water and measuring the fluorine ion concentration by a fluorine ion meter using a fluorine ion-selective electrode. The concentration of hydrogen chloride contained in the crude reaction gas, was measured by a neutralization titration method by letting the crude reaction gas be absorbed in water. Chloroform was quantitatively analyzed by means of capillary gas chromatography, after the crude reaction gas was absorbed in water and the organic substances were extracted with carbon disulfide.

### [Measurement of hydrogen fluoride-converted concentration]

The hydrogen fluoride-converted concentration (HF-converted concentration) in a gas or in an aqueous hydrochloric acid solution was obtained by measuring a fluorine ion concentration by means of the above-mentioned fluorine ion meter and converting it to a hydrogen fluoride concentration.

### [Measurement of hydrogen chloride concentration]

The hydrogen chloride concentration in an aqueous hydrochloric acid solution was measured by a neutralization titration method.

### [Ex.1]

Purification of hydrogen chloride was carried out by process steps shown in Fig. 1.

As the defluorination column 18, three towers-type (first tower, second tower and third tower) continuous fixed bed defluorination columns were used, and in each of the three towers, an adsorbent, trade name "KHD-24" (manufactured by Sumitomo Chemical Co., Ltd., activated alumina granular product, particle size: 2 to 4 mm, Al₂O₃ content: 99.7 mass%, SiO₂ content: 0.02 mass%, specific surface area: 270 m²/g) was packed in a total amount of 4,200 kg. Then, purified hydrogen chloride gas (HF-converted concentration: 2 mass ppm) and nitrogen gas were preliminarily passed therethrough. The respective flow rates of the purified hydrogen chloride gas and nitrogen gas passed, were changed as shown in (1) to (7) in Table 1. At the time of passing hydrogen chloride gas, passing of the hydrogen chloride gas was carried out until the temperature in the defluorination column 18 (i.e. the temperature of the adsorbent) reached equilibrium in the state of passing 100% hydrogen chloride gas. The temperature in the defluorination column did not exceed 90°C.

**Table 1**

| | Flow rate of HCl gas [m³/h] | Flow rate of nitrogen gas [m³/h] | Flow time [hours] |
|---|---|---|---|
| (1) | 0 | 15 | 1 |
| (2) | 2 | 15 | 3 |
| (3) | 3 | 15 | 3 |
| (4) | 4 | 15 | 3 |
| (5) | 4 | 10 | 3 |
| (6) | 4 | 5 | 3 |
| (7) | 4 | 0 | 1 |

Then, a crude reaction gas A (unreacted raw materials = 4.7 mass%, R-22 = 46.0 mass%, HCl = 42.3 mass%, others = 7.0 mass%) obtained by reacting hydrogen fluoride and chloroform, was supplied to the condenser 12, to condense high boiling substances including R-22 under R-22 condensing conditions (pressure: at least 1.0 M PaG, temperature: at most 0°C), thereby to obtain a condensate B containing R-22 and a crude hydrogen chloride gas C containing hydrogen chloride gas.

Then, the condensate B and the crude hydrogen chloride gas C were supplied to the distillation column 14, to subject the condensate B and the crude hydrogen chloride gas C to gas-liquid separation while heating the condensate B. The pressure in the distillation column 14 was 1.0 MPaG, the heating temperature of the condensate B was 25°C, and the temperature of the crude hydrogen chloride gas C distilled from the column top was -30°C.

Then, the pressure of the crude hydrogen chloride gas C distilled from the column top of the distillation column 14 was reduced to 0.7 MPaG, and then, the gas C was heated to 110°C by the preheater 16 and supplied to the defluorination column 18. The space velocity of the crude hydrogen chloride gas C was adjusted to be 0.2 m/sec., and the contact time of the crude hydrogen chloride gas C and the adsorbent was adjusted to be about 55 seconds in total of the three towers. Further, the pressure in the defluorination column 18 during the purification was 0.7 MPaG, the temperature of the gas at the outlet of the first defluorination tower was 115°C, the temperature of the gas at the outlet of the second defluorination tower was 110°C, and the temperature of the gas at the outlet of the third defluorination tower was 102°C.

Then, the hydrogen chloride gas D recovered from the defluorination column 18 was cooled to 42°C by the cooler 20 and supplied to the absorption column 22 and contacted with demineralized water (absorbing water E) to let hydrogen chloride in the hydrogen chloride gas D be absorbed in demineralized water. The flow rate of the absorbing water E was adjusted to be 0.0014 m³/sec., and the superficial velocity of the hydrogen chloride gas D was adjusted to be 2.5 m/sec., so that the contact time of the absorbing water E and the hydrogen chloride gas D would be 2 seconds. The temperature of an aqueous hydrochloric acid solution F recovered from the absorption column 22 was 25°C, and the hydrogen chloride concentration was 36.5 mass%.

The HF-converted concentration in each gas in the defluorination step was 10.03 mass ppm at the inlet of the first tower of the defluorination column 18, 5.52 mass ppm at the outlet of the first tower, 2.55 ppm at the outlet of the second tower, 1.90 mass ppm at the outlet of the third tower, and the HF-converted concentration in the aqueous hydrochloric acid solution F recovered from the absorption column 22 was 0.30 mass ppm.

### [Ex. 2]

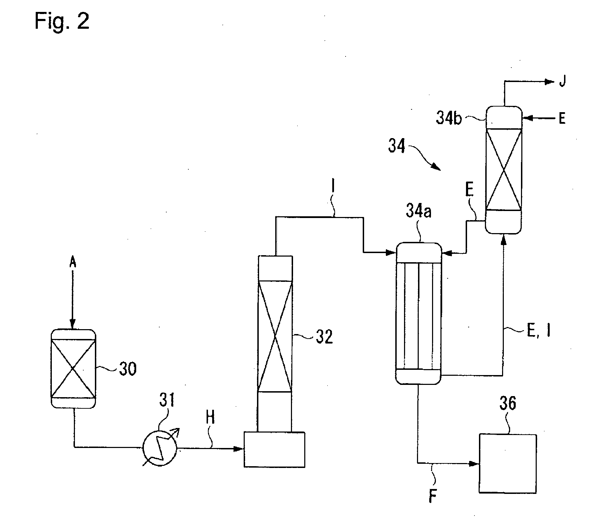

Purification of hydrogen chloride was carried out by process steps shown in Fig. 2. The same crude reaction gas A as used in Ex. 1, was supplied to an activated carbon tank 30 packed with about 7 kg of activated carbon, to adsorb and remove fluorinated compounds. The flow rate of the crude reaction gas A was adjusted to be 20 Nm³/hr, the temperature in the tank was adjusted to be 107°C, and the pressure in the tank was adjusted to be 4.7 kg/cm².

Then, gas H recovered from the activated carbon tank 30 was cooled to 40°C by a preheater 31 and supplied to a sulfuric acid cleaning column 32, whereby hydrogen fluoride in the gas H was reacted with sulfuric acid (HF + H₂SO₄ → HSO₃F + H₂O) and removed as a hydrofluoric acid sulfuric acid mixture.

Then, hydrogen chloride gas I recovered from the sulfuric acid cleaning column 32 was supplied to an absorption column 34 (in the same form as the absorption column 22, having a hydrogen chloride absorption column 34a and a packed tower-type recovery column 34b) and contacted with water (absorbing water E), whereby hydrogen chloride in the hydrogen chloride gas I was absorbed in water to form an aqueous hydrochloric acid solution F, and thus separated from R-21, R-22 and R-23. The flow rate of absorbing water E was adjusted to be 0.000011 m³/sec., and the superficial velocity of the hydrogen chloride gas I was adjusted to be 1.1 m/sec., so that the contact time of the absorbing water E and the hydrogen chloride gas I would be 2 seconds. The aqueous hydrochloric acid solution F was recovered in a recovery section 36. Further, a gas J not absorbed in absorbing water E was recovered from the column top of the packed tower-type recovery column 34b.

The HF-converted concentration in the crude reaction gas supplied to the activated carbon tank 30 was 6.6 mass%, and the HF-converted concentration in the hydrogen chloride gas at the outlet of the activated carbon tank 30 was 300 mass ppm. Further, the hydrogen chloride concentration in the aqueous hydrochloric acid solution F recovered from the absorption column 34 was 33 mass%, and the HF-converted concentration was 100 mass ppm.

### [Ex. 3]

An aqueous hydrochloric acid solution was obtained in the same manner as in Ex. 2 except that in order to decompose and remove carbonyl fluoride with water (COF₂ + H₂O → 2HF + CO₂), water was added to the activated carbon tank 30 (added amount: 11.4 g/Nm³-supplied reaction gas). Hydrogen fluoride formed by decomposition of carbonyl fluoride in the activated carbon tank 30 was removed as converted to a hydrofluoric acid sulfuric acid mixture in the sulfuric acid cleaning column 32.

The HF-converted concentration at the outlet of the activated carbon tank 30 was 19 mass ppm. Further, the hydrogen chloride concentration in the aqueous hydrochloric acid solution F recovered from the absorption column 34 was 33 mass%, and the HF-converted concentration was 6 mass ppm.

As described above, in Ex. 1 wherein hydrogen chloride was purified by the purification method of the present invention comprising the condensation step, the gas-liquid separation step, the defluorination step and the absorption step, the HF-converted concentration in the obtained aqueous hydrochloric acid solution was very low, and hydrogen fluoride was removed with high efficiency.

On the other hand, in Ex. 2 and Ex. 3 wherein hydrogen chloride was purified by the purification method of removing fluorine compounds by adsorption and removal by means of activated carbon and by decomposition and removal by means of sulfuric acid cleaning, the HF-converted concentration in the aqueous hydrochloric acid solution obtained, was high, and the efficiency in removal of hydrogen fluoride was low, as compared with in Ex. 1.

### INDUSTRIAL APPLICABILITY

The method of the present invention is useful for purification of hydrogen chloride formed as a by-product at the time of producing R-22, or for production of a purified aqueous hydrochloric acid solution.

The entire disclosure of Japanese Patent Application No. 2013-103270 filed on May 15, 2013 including specification, claims, drawings and summary is incorporated herein by reference in its entirety.

### REFERENCE SYMBOLS

12: Condenser, 14: Distillation column, 16: Preheater, 18: Defluorination column, 20: Cooler, 22: Absorption column, 24: Recovery section.

## Claims

1. A method for purifying hydrogen chloride from a crude reaction gas containing chlorodifluoromethane gas and hydrogen chloride gas, obtained by reacting hydrogen fluoride with chloroform, which comprises
a condensation step of condensing chlorodifluoromethane gas in the crude reaction gas to obtain a condensate containing chlorodifluoromethane, and a crude hydrogen chloride gas containing hydrogen chloride gas;
a gas-liquid separation step of subjecting the condensate and the crude hydrogen chloride gas to gas-liquid separation;
a defluorination step of contacting the separated crude hydrogen chloride gas with an adsorbent for adsorbing fluorine compounds, to adsorb and remove fluorine compounds in the crude hydrogen chloride gas thereby to purify hydrogen chloride gas; and
an absorption step of letting hydrogen chloride in the hydrogen chloride gas be absorbed in water or in an aqueous hydrochloric acid solution.

2. The method for purifying hydrogen chloride according to Claim 1, wherein in the gas-liquid separation step, the condensate is heated.

3. The method for purifying hydrogen chloride according to Claim 1 or 2, wherein the adsorbent is at least one member selected from the group consisting of activated alumina, aluminum hydroxide, aluminum chloride, silane and chlorosilane.

4. The method for purifying hydrogen chloride according to any one of Claims 1 to 3, wherein in the defluorination step, the temperature of the adsorbent is from 100 to 120°C.

5. The method for purifying hydrogen chloride according to any one of Claims 1 to 4, wherein in the defluorination step, the pressure under which the separated crude hydrogen chloride gas is contacted with the adsorbent for adsorbing fluorine compounds, is from 0.65 to 0.8 MPaG.

6. The method for purifying hydrogen chloride according to any one of Claims 1 to 5, wherein in the defluorination step, the superficial velocity at which the separated crude hydrogen chloride gas is contacted with the adsorbent for adsorbing fluorine compounds, is from 0.05 to 0.50 m/sec.

7. The method for purifying hydrogen chloride according to any one of Claims 1 to 6, wherein in the absorption step, the content of fluorine in the obtainable aqueous hydrochloric acid solution is at most 0.8 mg/L as calculated as hydrogen fluoride.

8. The method for purifying hydrogen chloride according to any one of Claims 1 to 7, wherein in the absorption step, the hydrogen chloride concentration in the obtainable aqueous hydrochloric acid solution is from 30 to 40 mass%.

9. The method for purifying hydrogen chloride according to any one of Claims 1 to 8, wherein the adsorbent is activated alumina which has been preliminarily contacted with purified hydrogen chloride gas.

10. The method for purifying hydrogen chloride according to Claim 9, wherein the temperature of the activated alumina at the time of being preliminarily contacted with purified hydrogen chloride gas, is at most 90°C.

11. A method for producing an aqueous hydrochloric acid solution, which comprises conducting the method for purifying hydrogen chloride as defined in any one of Claims 1 to 10.
